# FASCICULE DE BREVET EUROPEEN

(11) **EP 1 556 767 B1**
(45) Date de publication et mention de la délivrance du brevet: **13.10.2010**
(21) Numéro de dépôt: 02793199.7
(22) Date de dépôt: 29.10.2002
(51) Int. Cl.: G06F 11/36, G06F 11/34

(54) **CORRELATION TEMPORELLE DE MESSAGES TRANSMIS PAR UN CIRCUIT DE SURVEILLANCE D'UN MICROPROCESSEUR**
ZEITKORRELATION VON, DURCH EINE ÜBERWACHUNGSSCHALTUNG EINES MIKROPROZESSORS, ÜBERTRAGENEN NACHRICHTEN
TEMPORAL CORRELATION OF MESSAGES TRANSMITTED BY A MICROPROCESSOR MONITORING CIRCUIT

(43) Date de publication de la demande: 27.07.2005
(73) Titulaire: STMicroelectronics S.A., 92120 Montrouge (FR)
(72) Inventeur: REGNIER, Laurent, F-38610 Gieres (FR)
(74) Mandataire: de Beaumont, Michel
(86) Numéro de dépôt international: PCT/FR2002/003725
(87) Numéro de publication internationale: WO 2004/042580

(56) Documents cités:
- US-A- 5 996 092
- US-B1- 6 332 117
- NEXUS 5001 FORUM: "Standard for a Global Embedded Processor Debug Interface" 15 décembre 1999 (1999-12-15) , IEEE-ISTO XP002247195 cité dans la demande tableaux 6-6,6-7,6-12-6-15

## Description

La présente invention concerne le test de microprocesseurs. Elle concerne plus particulièrement un procédé et un dispositif de transmission de données numériques entre un circuit de surveillance intégré dans une puce de microprocesseur et un outil d'analyse.

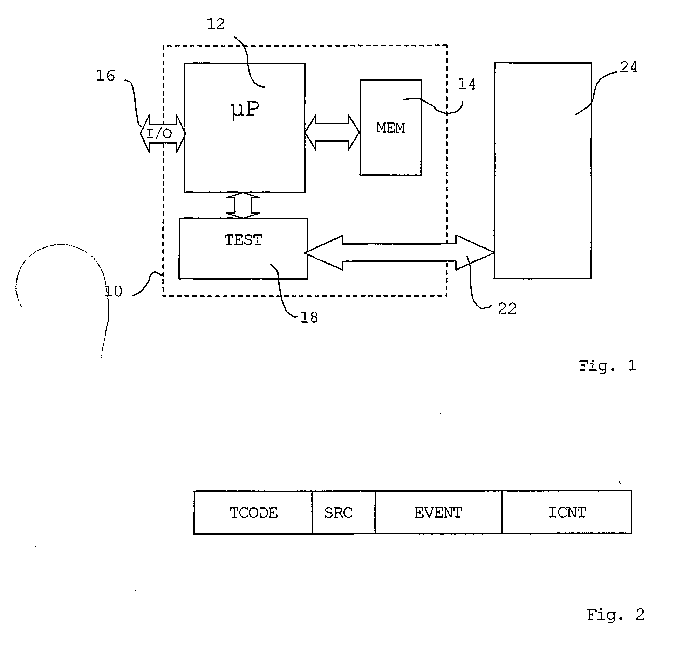

La figure 1 représente de façon schématique un circuit intégré 10 comportant un microprocesseur (µP) 12, une mémoire interne (MEM) 14 et des bornes d'entrée/sortie (I/O) 16. Le microprocesseur 12 est destiné à exécuter un programme ou logiciel stocké dans la mémoire 14. Sous la commande du programme, le microprocesseur 12 peut traiter des données fournies par les bornes d'entrée/sortie 16 ou stockées dans la mémoire 14 et lire ou écrire des données par les bornes d'entrée/sortie 16.

De façon à vérifier le bon fonctionnement du microprocesseur, on intègre généralement au circuit intégré 10 un circuit de surveillance 18 (TEST). Le circuit de surveillance 18 est adapté à lire des données spécifiques fournies par le microprocesseur 12 lors du déroulement d'un programme, et à réaliser éventuellement un traitement sur les données lues. Des bornes de test 22 relient le circuit de surveillance 18 à un outil d'analyse 24. L'outil d'analyse 24 peut effectuer un traitement des signaux reçus, par exemple en fonction de commandes fournies par un utilisateur, et assurer une analyse détaillée du fonctionnement du microprocesseur 12. En particulier, l'outil d'analyse 24 peut déterminer la séquence d'instructions du programme réellement exécutée par le microprocesseur 12.

Le nombre de bornes de test 22 peut être du même ordre de grandeur que le nombre de bornes d'entrée/sortie 16, par exemple 200 à 400 bornes. Les bornes de test 22 ainsi que les connexions du circuit de surveillance 18 occupent une surface de silicium importante, ce qui entraîne un accroissement indésirable du coût du circuit. Pour cela, une première version du circuit intégré 10 incluant le circuit de surveillance 18 et les bornes de test 22 est produite en petites quantités pour effectuer la mise au point du programme du microprocesseur 12 ou "programme utilisateur". Après cette mise au point, une version du circuit intégré 10 débarrassée du circuit de surveillance 18 et des bornes de test 22 est commercialisée. Cela implique la réalisation de deux versions du circuit intégré, ce qui demande un travail important et est relativement coûteux. De plus, la puce finale n'est pas forcément identique à la puce testée.

Pour pallier les inconvénients précédemment mentionnés, on cherche à réaliser un circuit de surveillance 18 qui occupe une surface réduite et nécessite seulement un nombre réduit de bornes de test 22, ce qui diminue le coût de revient du circuit de surveillance. Le circuit de surveillance 18 peut alors être laissé sur le circuit intégré 10 finalement commercialisé.

On cherche donc 'à diminuer le nombre de signaux fournis par le circuit de surveillance 18. Pour ce faire, on fait réaliser directement au niveau du circuit de surveillance 18 certaines opérations logiques sur les données mesurées au niveau du microprocesseur 12 de façon à transmettre seulement des messages ayant un contenu informationnel important.

Ainsi, la norme IEEE-ISTO-5001 en préparation propose dans sa version de 1999, accessible par exemple sur le site www.ieee-isto.org/Nexus5001, un protocole particulier d'échanges de messages entre un circuit de surveillance et un outil d'analyse pour un circuit de surveillance 18 ne nécessitant qu'un nombre réduit de bornes de test 22.

Parmi les messages fournis par le circuit de surveillance 18 selon la norme IEEE-ISTO-5001, on distingue les messages de suivi de programme et les messages de données. Les messages de suivi de programme fournissent des informations par rapport à l'ordre d'exécution des instructions du programme par le microprocesseur 12. Il peut s'agir par exemple d'un message indiquant qu'un saut a eu lieu lors du déroulement du programme exécuté par le microprocesseur 12. Les messages de données correspondent aux autres messages fournis par le circuit de surveillance 18 et fournissent notamment des informations sur les données traitées par le microprocesseur. Il peut s'agir d'un message représentatif d'une opération de lecture ou d'écriture d'une donnée dans une zone de la mémoire 14.

A partir des messages de suivi de programme transmis par le circuit de surveillance 18, l'outil d'analyse 24 cherche à reconstituer la séquence d'instructions exécutée par le microprocesseur 12. La séquence d'instructions reconstituée peut alors être comparée à une séquence d'instructions théoriquement exécutée par le microprocesseur 12 de façon à déterminer des dysfonctionnements du microprocesseur 12.

Lorsque le circuit de surveillance 18 transmet à l'outil d'analyse 24 l'ensemble des messages de suivi de programme et des messages de données, l'outil d'analyse 24 parvient généralement à attribuer à chaque message reçu une instruction spécifique du programme au moyen d'algorithmes adaptés. Toutefois, pour éviter que la fréquence de transmission de données du circuit de surveillance 18 dépasse la bande passante imposée par les technologies utilisées pour réaliser les éléments intermédiaires entre le circuit de surveillance 18 et les bornes de test 22, c'est-à-dire pour éviter la saturation du circuit de surveillance 18, on ne transmet généralement, sur une même portion de programme, que certains des messages prévus par la norme IEEE-ISTO-5001. Par exemple, seules les opérations de lecture concernant une zone précise de la mémoire 14 peuvent faire l'objet de la transmission de messages à l'outil d'analyse 24. Dans un tel exemple, lorsque l'outil d'analyse 24 reçoit successivement plusieurs messages de données entre deux messages de suivi de programme, il peut être délicat de faire correspondre une instruction du programme particulière à chaque message de données reçu si, entre les deux instructions du programme correspondant aux deux messages de suivi de programme, il existe un nombre important d'instructions pouvant être à l'origine des messages de données reçus. L'établissement de correspondances est encore plus difficile, voire impossible dans certains cas, par exemple lorsqu'un mode d'adressage indirect est utilisé. Un exemple d'utilisation de mode d'adressage indirect correspond à une opération de lecture ou d'écriture d'une donnée associée à une instruction du programme qui ne comprend pas explicitement l'adresse d'un registre de la mémoire dans lequel la donnée doit être écrite ou lue mais qui comprend l'adresse d'un registre dans lequel est stockée l'adresse du registre de la mémoire dans lequel la donnée doit être écrite ou lue. Dans le cas où plusieurs instructions du programme associées à une opération de lecture ou d'écriture sont voisines et font référence à un même registre, il peut alors être difficile, voire impossible, d'établir la correspondance entre les messages reçus et les instructions correspondantes.

La norme IEEE-ISTO-5001 prévoit également la transmission périodique d'un message de suivi de programme particulier appelé message de synchronisation comprenant l'adresse complète de l'instruction venant d'être exécutée par le microprocesseur 12 à l'instant où le message de synchronisation a été produit par le circuit de surveillance 18. Les messages de synchronisation qui permettent à l'outil d'analyse 24 de vérifier qu'il est en train d'effectuer une corrélation correcte entre les messages reçus et les instructions du programme exécutées par le microprocesseur 12, et dans le cas contraire, d'ajuster la corrélation. Un message de synchronisation est également transmis de façon ponctuelle lorsque le circuit de surveillance 18 commence la transmission de messages à l'outil d'analyse 24 ou l'interrompt.

Une possibilité pour faciliter la corrélation entre des messages reçus par l'outil d'analyse 24 et des instructions du programme consisterait à transmettre un message de synchronisation avec chaque message de données. Toutefois, le codage de l'adresse complète qui est contenue dans un message de synchronisation requiert un nombre de bits important. L'utilisation systématique de messages de synchronisation risquerait donc de provoquer la saturation du circuit de surveillance 18. En outre, comme cela a déjà été expliqué, des messages de synchronisation sont déjà transmis de façon périodique ou ponctuelle à l'outil d'analyse 24 à d'autres fins. Il serait alors difficile pour l'outil d'analyse 24 de faire la différence entre des messages de synchronisation associés à des messages de données et des messages de synchronisation transmis de façon périodique ou ponctuelle.

Le document US 5 996 092 décrit un procédé de transmission de messages de corrélation à intervalles réguliers. La norme IEEE-ISTO-5001 prévoit la transmission d'un message de saut indiquant le nombre d'instructions exécutées par un microprocesseur depuis la transmission du message de saut précédent.

La présente invention prévoit un dispositif et un procédé de transmission de messages numériques entre un circuit de surveillance d'un microprocesseur et un outil d'analyse permettant à l'outil d'analyse d'effectuer une corrélation correcte entre les messages reçus et des instructions du programme exécuté par le microprocesseur.

La présente invention permet également de ne pas modifier les messages déjà prévus par la norme IEEE-ISTO-5001.

Pour atteindre ces objets, la présente invention prévoit un procédé de transmission de messages numériques par des bornes de sortie d'un circuit de surveillance intégré à un microprocesseur, lesdits messages étant représentatifs d'évènements déterminés se produisant lors de l'exécution d'instructions par le microprocesseur, comprenant l'étape consistant, après ou avant la transmission de chaque message spécifique associé à un évènement particulier, à transmettre un message de corrélation comprenant un identifiant de message de corrélation, un identifiant dudit message spécifique et un compteur du nombre d'instructions exécutées par le microprocesseur entre l'instruction associée à la transmission dudit message spécifique et l'instruction associée à la transmission d'un message antérieur choisi.

Selon un mode de réalisation de l'invention, le message antérieur choisi est le message spécifique immédiatement précédent.

Selon un mode de réalisation de l'invention, le message numérique spécifique est représentatif d'une instruction de lecture ou d'écriture de données.

Selon un mode de réalisation de l'invention, le message numérique spécifique est représentatif d'un évènement indépendant de l'exécution d'une instruction par le microprocesseur.

Selon un mode de réalisation de l'invention, les messages numériques transmis sont reçus par un outil d'analyse adapté à associer à partir des messages de corrélation une instruction exécutée par le microprocesseur à chaque message numérique transmis.

La présente invention prévoit également un dispositif de transmission de messages numériques par des bornes de sortie d'un circuit de surveillance intégré à un microprocesseur, lesdits messages numériques étant représentatifs d'évènements déterminés se produisant lors de l'exécution d'instructions par le microprocesseur, comprenant un moyen pour détecter si un message à transmettre par le circuit de surveillance est d'un type particulier ; et un moyen pour transmettre, après ou avant la transmission de chaque message numérique spécifique dudit type particulier,
un message de corrélation, ledit message de corrélation comprenant un identifiant de message de corrélation, un identifiant dudit message numérique spécifique et un compteur du nombre d'instructions exécutées par le microprocesseur entre l'instruction associée à la transmission du message numérique spécifique et l'instruction associée à la transmission d'un message numérique antérieur choisi.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente de façon très schématique l'architecture d'une puce classique intégrant un microprocesseur et un circuit de surveillance ; et
la figure 2 représente un exemple de message selon l'invention transmis par le circuit de surveillance à l'outil d'analyse.

Selon la présente invention, le circuit de surveillance 18 transmet un message de corrélation avant ou après la transmission de chaque message de données. Le message de corrélation comprend un compteur égal au nombre d'instructions exécutées par le microprocesseur 12 entre l'instruction à l'origine du message de données qui vient d'être transmis ou va être transmis et l'instruction à l'origine du précédent message de données qui a été transmis. A partir des compteurs fournis par les messages de corrélation, l'outil d'analyse 24 peut effectuer de façon sûre une corrélation entre le message de données qui vient d'être reçu ou va être reçu et une instruction du programme.

La figure 2 représente un exemple de message numérique de corrélation selon l'invention.

Le message de corrélation comprend un premier champ TCODE comportant un nombre fixe de bits et égal à un code identifiant le message de corrélation.

Un second champ SRC du message de corrélation comporte un nombre variable de bits et indique si le circuit de surveillance 18 échange simultanément des données avec plusieurs microprocesseurs ou bien si le circuit de surveillance 18 échange des données avec un même microprocesseur exécutant simultanément plusieurs programmes différents. Le second champ ne contient aucun bit dans le cas où le circuit de surveillance 18 est relié à un seul microprocesseur 12 qui exécute un seul programme.

Un troisième champ EVENT du message de corrélation comporte un nombre variable de bits et est égal à un identifiant du message de données associé au message de corrélation. Selon le nombre de types possibles de messages de données pouvant être associés à un message de corrélation, la taille du champ EVENT est plus ou moins importante. Les messages de données les plus fréquents correspondent par exemple à un message représentatif d'une instruction de lecture ou d'écriture, à un message indiquant que certaines conditions de fonctionnement du microprocesseur sont remplies ou à un message indiquant la survenue d'un évènement particulier qui ne dépend pas nécessairement du fonctionnement du microprocesseur 12. Dans le dernier exemple, l'évènement particulier correspond par exemple à la réception par le microprocesseur 12 d'un signal indiquant que le niveau de charge des batteries alimentant la puce 10 est en dessous d'un seuil déterminé. Il peut s'agir également, pour une application en téléphonie mobile, de l'émission d'un signal de commande de l'extinction d'un écran de téléphone portable. De plus, la norme IEEE-ISTO-5001 permet à un utilisateur de prévoir des messages personnalisés en plus des messages explicitement prévus par la norme. Les messages personnalisés sont alors considérés comme des messages de données et la transmission d'un message personnalisé est précédée ou suivie de la transmission d'un message de corrélation.

Un quatrième champ ICNT du message de corrélation comporte un nombre variable de bits et indique le nombre d'instructions du programme exécutées par le microprocesseur 12 entre l'instruction qui est à l'origine de la transmission du message de données associé au message de corrélation et l'instruction qui est à l'origine de la transmission du dernier message de données.

Les messages de corrélation sont utilisés par l'outil d'analyse 24 pour faire correspondre à chaque message de données une instruction du programme exécuté par le microprocesseur 12. Pour parvenir à ce résultat, l'outil d'analyse 24 utilise également les messages de suivi de programme pour lesquels l'attribution d'une instruction du programme ne présente pas généralement de difficultés. De ce fait, lorsque l'utilisateur inhibe la fonction d'envoi de messages de suivi de programme par le circuit de surveillance 18, il n'est plus transmis de messages de corrélation.

Le message de corrélation peut être transmis avec n'importe quel type de message de données ou avec des types de messages de données particuliers. Selon la norme IEEE-ISTO-5001, chaque message transmis par le circuit de surveillance 18 comprend un code identifiant du type de message. Lorsque le circuit de surveillance 18 produit un message, il détecte le code identifiant du message produit pour associer ou non au message produit un message de corrélation.

La présente invention comporte de nombreux avantages :
Premièrement, elle permet d'assurer une corrélation sans ambiguïté entre chaque message reçu par l'outil d'analyse et une instruction du programme exécuté par le microprocesseur.
Deuxièmement, elle permet de limiter le nombre de données supplémentaires à transmettre par le circuit de surveillance. En effet, le message de corrélation prévu par la présente invention comprend un compteur d'instructions dont la taille est réduite et, en particulier, est inférieure à celle d'une adresse d'instruction complète utilisée par le message de synchronisation.
Troisièmement, elle permet de simplifier les algorithmes utilisés par l'outil d'analyse pour établir la corrélation entre les messages reçus et les instructions du programme.
Quatrièmement, la présente invention permet de ne pas modifier les messages déjà prévus par la norme IEEE-ISTO-5001 puisqu'elle prévoit seulement d'ajouter un nouveau message de corrélation.

Bien entendu, la présente invention est susceptible de diverses variantes et modifications qui apparaîtront à l'homme de l'art. En particulier, on peut prévoir que le circuit de surveillance reçoive directement certains signaux par les bornes d'entrée/sortie de la puce. De tels signaux peuvent être utilisés pour la détection par le circuit de surveillance d'évènements dont on souhaite indiquer à l'outil d'analyse qu'ils se sont produits.

## Revendications

1. Procédé de transmission de messages numériques par des bornes de sortie (22) d'un circuit de surveillance (18) intégré à un microprocesseur (12), lesdits messages étant représentatifs d'évènements déterminés se produisant lors de l'exécution d'instructions par le microprocesseur, comprenant l'étape consistant, après ou avant la transmission d'au moins un message spécifique associé à un évènement particulier, à transmettre un message de corrélation **caractérisé en ce que**
- ledit message de corrélation comprend un identifiant de message de corrélation, un identifiant dudit message spécifique et un compteur du nombre d'instructions exécutées par le microprocesseur entre l'instruction associée à la transmission dudit message spécifique et l'instruction associée à la transmission d'un message antérieur choisi
- ledit message de corrélation est transmis après ou avant la transmission de chaque message spécifique.

2. Procédé selon la revendication 1, dans lequel le message antérieur choisi est le message spécifique immédiatement précédent.

3. Procédé selon la revendication 1, dans lequel le message numérique spécifique est représentatif d'une instruction de lecture ou d'écriture de données.

4. Procédé selon la revendication 1, dans lequel le message numérique spécifique est représentatif d'un évènement indépendant de l'exécution d'une instruction par le microprocesseur (12).

5. Procédé selon la revendication 1, dans lequel les messages numériques transmis sont reçus par un outil d'analyse (24) adapté à associer à partir des messages de corrélation une instruction exécutée par le microprocesseur (12) à chaque message numérique transmis.

6. Dispositif de transmission de messages numériques par des bornes de sortie (22) d'un circuit de surveillance (18) intégré à un microprocesseur (12), lesdits messages numériques étant représentatifs d'évènements déterminés se produisant lors de l'exécution d'instructions par le microprocesseur, comprenant :
un moyen pour détecter si un message à transmettre par le circuit de surveillance est d'un type particulier ; et
un moyen pour transmettre, après ou avant la transmission d'au moins un message numérique spécifique dudit type particulier, un message de corrélation, **caractérisé en ce que**
- ledit message de corrélation comprend un identifiant de message de corrélation, un identifiant dudit message numérique spécifique et un compteur du nombre d'instructions exécutées par le microprocesseur entre l'instruction associée à la transmission du message numérique spécifique et l'instruction associée à la transmission d'un message numérique antérieur choisi
- ledit message de corrélation est transmis après ou avant la transmission de chaque message spécifique.

## Claims

1. A method for transmitting digital messages through output terminals (22) of a monitoring circuit (18) integrated to a microprocessor (12), said messages being representative of determined events occurring on execution of instructions by the microprocessor, comprising the step of, after or before transmission of at least one specific message associated with a specific event, transmitting a correlation message, **characterized in that**:
- said correlation message comprises a correlation message identifier, an identifier of said specific message and a counter of the number of instructions executed by the microprocessor between the instruction associated with the transmission of said specific message and the instruction associated with the transmission of a selected previous message;
- said correlation message is transmitted after or before the transmission of each specific message.

2. The method of claim 1, in which the selected previous message is the immediately preceding specific message.

3. The method of claim 1, in which the specific digital message is representative of a data read or write instruction.

4. The method of claim 1, in which the specific digital message is representative of an event independent from the execution of an instruction by the microprocessor (12).

5. The method of claim 1, in which the transmitted digital messages are received by an analysis tool (24) capable of associating based on correlation messages an instruction executed by the microprocessor (12) with each transmitted digital message.

6. A device for transmitting digital messages through output terminals (22) of a monitoring circuit (18) integrated to a microprocessor (12), said digital messages being representative of determined events occurring on execution of instructions by the microprocessor, comprising:
means for detecting whether a message to be transmitted by the monitoring circuit is of a specific type; and
means for transmitting, after or before transmission of at least one digital message of said specific type, a correlation message, **characterized in that**:
- said correlation message comprises a correlation message identifier, an identifier of said specific digital message and a counter of the number of instructions executed by the microprocessor between the instruction associated with the transmission of the specific digital message and the instruction associated with the transmission of a selected previous digital message,
- said correlation message is transmitted after or before the transmission of each specific message.

## Patentansprüche

1. Ein Verfahren zum Senden von digitalen Nachrichten über Ausgabeanschlüsse (22) eines Überwachungsschaltkreises (18) integriert in einem Mikroprozessor (12) wobei die Nachrichten repräsentativ sind für bestimmte Ereignisse, die beim Ausführen der Instruktionen durch den Mikroprozessor auftreten, wobei das Verfahren den folgenden Schritt aufweist:
nach oder vor dem Senden von wenigstens einer spezifischen Nachricht assoziiert mit einem spezifischen Ereignis, Senden einer Korrelierungsnachricht, **gekennzeichnet dadurch, dass**:
die Korrelierungsnachricht einen Korrelierungsnachricht Identifizierer, einen Identifizierer der spezifischen Nachricht und einen Zähler von der Anzahl der Instruktionen, die durch den Mikroprozessor zwischen der Instruktion assoziiert mit der Sendung der spezifischen Nachricht und der Instruktion assoziiert mit der Sendung einer ausgewählten vorherigen Nachricht ausgeführt wurde, aufweist;
wobei die Korrelierungsnachricht nach oder vor der Sendung von jeder spezifischen Nachricht gesendet wird.

2. Verfahren nach Anspruch 1, in dem die ausgewählte vorherige Nachricht die sofortige vorhergehende spezifische Nachricht ist.

3. Verfahren nach Anspruch 1, in dem die spezifische digitale Nachricht repräsentativ ist für eine Datenlese- oder Datenschreibinstruktion.

4. Verfahren nach Anspruch 1, indem die spezifische digitale Nachricht repräsentativ ist für ein Ereignis unabhängig von der Ausführung einer Instruktion durch den Mikroprozessor (12).

5. Verfahren nach Anspruch 1, in dem die gesendeten digitalen Nachrichten von einem Analyse-Tool (24) empfangen werden, das in der Lage ist zum Assoziieren einer Instruktion ausgeführt durch den Mikroprozessor (12) mit jeder gesendeten digitalen Nachricht basierend auf den Korrelierungsnachrichten.

6. Ein Gerät zum Senden von digitalen Nachrichten über Ausgabeanschlüsse (22) eines Überwachungsschaltkreises (18) integriert in einen Mikroprozessor (12) wobei die digitalen Nachrichten repräsentativ sind für bestimmte Ereignisse, die bei der Ausführung von Instruktionen durch den Mikroprozessor auftreten, wobei das Gerät folgendes aufweist:
Mittel zum Detektieren, ob eine Nachricht, die von dem Überwachungsschaltkreis gesendet werden soll, einen spezifischen Typ hat; und
Mittel zum Senden nach oder vor der Sendung von wenigstens einer digitalen Nachricht dieses spezifischen Typs, einer Korrelierungsnachricht, **gekennzeichnet dadurch, dass**
die Korrelierungsnachricht einen Korrelierungsnachrichtenidentifizierer, einen Identifizierer der spezifischen digitalen Nachricht und einen Zähler der Anzahl von Instruktionen, die durch den Mikroprozessor zwischen der Instruktion assoziiert mit der Sendung der spezifischen digitalen Nachricht und der Instruktion assoziiert mit der Sendung einer ausgewählten vorherigen digitalen Nachricht ausgeführt wurden, aufweist;
wobei die Korrelierungsnachricht nach oder vor der Sendung von jeder spezifischen Nachricht gesendet wird.
